# EUROPÄISCHE PATENTANMELDUNG

(11) **EP 3 329 826 A1**
(43) Veröffentlichungstag der Anmeldung: **06.06.2018**
(21) Anmeldenummer: 17200964.9
(22) Anmeldetag: 10.11.2017
(51) Int. Cl.: A47L 13/50, B62B 3/10

(54) **MOBILE REINIGUNGSVORRICHTUNG**

(30) Priorität: 11.11.2016 DE 202016106318 U
(71) Anmelder: Therre, Bernd, 66914 Waldmohr (DE); Schnurr, Sylvia, 66424 Homburg (DE); Schnurr, Karl, 66424 Homburg (DE)
(72) Erfinder: Therre, Bernd, 66914 Waldmohr (DE); Schnurr, Sylvia, 66424 Homburg (DE); Schnurr, Karl, 66424 Homburg (DE)
(74) Vertreter: Patentanwaltskanzlei Vièl & Wieske PartGmbB

(57) **Zusammenfassung**

Die Erfindung betrifft eine mobile Reinigungsvorrichtung.

Um eine mobile Reinigungsvorrichtung zu schaffen, die kein Bücken und kein Anheben bzw. Tragen mehr erfordert, wird im Rahmen der Erfindung vorgeschlagen, daß ein fahrbares Gestell mit mindestens drei Beinen vorgesehen ist, welche an ihrem unteren Ende mit Rollen versehen sind, wobei das Gestell eine Aufnahme für ein Reinigungsgefäß aufweist, wobei das Reinigungsgefäß in seinem Boden einen Auslaßstutzen aufweist und das fahrbare Gestell so ausgebildet ist, daß zum Entleeren des Reinigungsgefäßes eine Toilettenschüssel überfahrbar ist.

Die mobile Reinigungsvorrichtung kann zu einem Wasseranschluß gefahren und dort - beispielsweise über einen Schlauch - befüllt werden, ohne daß das Reinigungsgefäß angehoben werden muß. Anschließend kann die mobile Reinigungsvorrichtung zum Ort des Reinigungsvorgangs geschoben werden, so daß auch hierbei kein Tragen des Reinigungsgefäßes erforderlich ist.

## Beschreibung

Die Erfindung betrifft eine mobile Reinigungsvorrichtung.

Beim Putzen im privaten Haushalt sowie auch in gewerblichen Bereichen wird in der Regel ein Reinigungsgefäß, insbesondere ein Putzeimer, mit einem Inhalt von 10 bis 121 verwendet, der mit Wasser befüllt ist, welches mit Reinigungsmittel versetzt ist. Zum Befüllen mit Wasser muß das Reinigungsgefäß ein erstes Mal angehoben werden.

Anschließend muß das Reinigungsgefäß jeweils an den zu reinigenden Ort getragen werden.

Um sich nicht beim Ausspülen des Putztuches jedes Mal bücken zu müssen, wird das Reinigungsgefäß idealerweise in einer Höhe von 80 bis 100 cm über dem Boden abgestellt. Allerdings besteht nicht immer die Möglichkeit, das Reinigungsgefäß in dieser Höhe abzustellen.

Nach dem Beenden des Putzvorgangs, bzw. sobald das Wasser einen bestimmten Verschmutzungsgrad erreicht hat, muß das verschmutzte Wasser entsorgt werden. Hierzu muß das befüllte Reinigungsgefäß erneut angehoben werden.

Gerade bei älteren Menschen oder solchen mit Rückenerkrankungen sind das häufige Bücken während des Putzvorgangs sowie das Anheben und Tragen des Reinigungsgefäßes sehr mühsam.

Die Aufgabe der Erfindung besteht darin, eine mobile Reinigungsvorrichtung zu schaffen, die kein Bücken und kein Anheben bzw. Tragen mehr erfordert.

Diese Aufgabe wird erfindungsgemäß dadurch gelöst, daß ein fahrbares Gestell mit mindestens drei Beinen vorgesehen ist, welche an ihrem unteren Ende mit Rollen versehen sind, wobei das Gestell eine Aufnahme für ein Reinigungsgefäß aufweist, wobei das Reinigungsgefäß in seinem Boden einen Auslaßstutzen aufweist und das fahrbare Gestell so ausgebildet ist, daß zum Entleeren des Reinigungsgefäßes eine Toilettenschüssel überfahrbar ist.

Die mobile Reinigungsvorrichtung kann zu einem Wasseranschluß gefahren und dort - beispielsweise über einen Schlauch - befüllt werden, ohne daß das Reinigungsgefäß angehoben werden muß. Anschließend kann die mobile Reinigungsvorrichtung zum Ort des Reinigungsvorgangs geschoben werden, so daß auch hierbei kein Tragen des Reinigungsgefäßes erforderlich ist. Schließlich wird mit dem Gestell eine Toilettenschüssel oder dergleichen überfahren und der Auslaßstutzen geöffnet, so daß sich das Putzwasser in die Toilettenschüssel ergießt. Das Reinigungsgefäß kann dann erneut befüllt werden.

Es liegt im Rahmen der Erfindung, daß Mittel zum lösbaren Verschließen des Auslaßstutzens vorgesehen sind.

In diesem Zusammenhang ist es vorteilhaft, daß eine Hebelmechanik zum Verschließen des Auslaßstutzens vorgesehen ist.

Dies ermöglicht ein Ablassen des Putzwassers ohne daß der Benutzer mit diesem in Berührung kommt.

Eine Weiterbildung der Erfindung besteht darin, daß sich an den Auslaßstutzen ein Auslaßschlauch anschließt.

Hierdurch wird die Gefahr eines Verspritzens des Putzwassers deutlich reduziert.

Es ist vorteilhaft, daß das fahrbare Gestell eine lösbare Bremsvorrichtung aufweist.

Dies ermöglicht es, die mobile Reinigungsvorrichtung auch auf abschüssigen Strecken abzustellen.

Es ist erfindungsgemäß vorgesehen, daß das Gestell vier Beine aufweist.

Eine vorteilhafte Ausgestaltung der Erfindung besteht darin, daß die Beine des Gestells längenveränderbar sind.

Dies ermöglicht es, die Höhe des Reinigungsgefäßes den Körpermaßen des jeweiligen Benutzers anzupassen.

Eine bevorzugte Ausgestaltung der Erfindung besteht darin, daß an dem Gestell Befestigungsmittel für Gegenstände, insbesondere für Reinigungsgeräte, vorgesehen sind.

Weiterhin ist es vorteilhaft, daß an dem Gestell Griffe zum Schieben bzw. Ziehen des mobilen Reinigungsgerätes vorgesehen sind.

Schließlich liegt es im Rahmen der Erfindung, daß das Reinigungsgefäß innen und/oder außen magnetisiert ist.

Das Reinigungsgefäß kann beispielsweise aus Metall oder aus Kunststoff bestehen. Es ist vorteilhaft, wenn das Reinigungsgefäß innen und/oder außen magnetisiert ist, da dies ermöglicht, zu reinigende Gegenstände an dem Reinigungsgefäß lösbar zu befestigen. Beispielsweise können Pinsel oder Reinigungsmittel, beispielsweise eine Bürste oder Stahlwolle, außen oder innen (beispielsweise zum Abtropfen) an dem Reinigungsgefäß befestigt und bei Bedarf wieder von diesem gelöst werden.

Die erfindungsgemäße Reinigungsvorrichtung kann sowohl in Haushalten als auch im gewerblichen Bereich, beispielsweise bei der Reinigung von Gebäuden oder Fahrzeugen, insbesondere Autos, Zügen, Flugzeugen und Schiffen sowie im Handwerk, beispielsweise bei Malerarbeiten verwendet werden.

Nachfolgend wird ein Ausführungsbeispiel der Erfindung anhand von Zeichnungen erläutert.

Es zeigen
- Fig. 1: eine Seitenansicht der erfindungsgemäßen mobilen Reinigungsvorrichtung,
- Fig. 2: eine Draufsicht auf die mobile Reinigungsvorrichtung,
- Fig. 3: eine Seitenansicht des Reinigungsgefäßes.

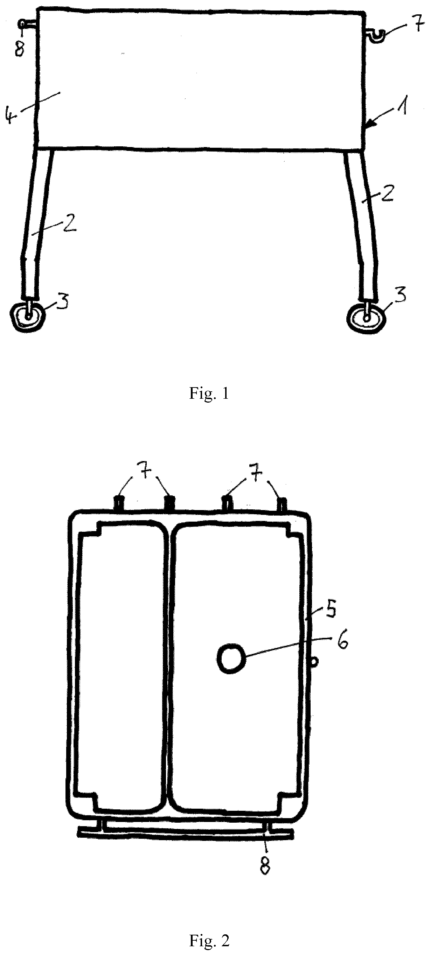

Wie aus den Fig. 1 und 2 ersichtlich, weist die dort dargestellte erfindungsgemäße mobile Reinigungsvorrichtung ein fahrbares Gestell 1 mit vier Beinen 2 auf, welche an ihrer Unterseite mit Rollen 3 versehen sind. Das Gestell 1 weist eine Aufnahme 4 für ein Reinigungsgefäß 5 auf. Das Reinigungsgefäß 5 ist hier zweigeteilt und weist in seinem Boden einen Auslaßstutzen 6 auf und das fahrbare Gestell 1 ist so ausgebildet ist, daß zum Entleeren des Reinigungsgefäßes 5 eine Toilettenschüssel überfahren werden kann.

Diese Ausgestaltung ermöglicht es, beliebige zu reinigende Stellen zum Reinigen anzufahren, ohne daß das Reinigungsgefäß 5 zum Befüllen oder Entleeren angehoben werden muß.

Die Beine 2 des Gestells 1 können längenveränderbar sein (beispielsweise teleskopierbar oder aus mehreren Einzelelementen zusammenbaubar), um die Höhe der Reinigungsvorrichtung der Körpergröße des jeweiligen Benutzers anpassen zu können.

Es sind Mittel zum lösbaren Verschließen des Auslaßstutzens 6 vorgesehen, die beispielsweise als ein an einer Kette befestigter Stopfen ausgebildet sein können. Vorzugsweise ist eine von der Außenseite des Reinigungsgefäßes 5 her zu betätigende Hebelmechanik zum Verschließen des Auslaßstutzens 6 vorgesehen, wodurch der Kontakt des Benutzers mit dem Putzwasser und dem darin enthaltenen Reinigungsmittel vermieden wird.

Vorzugsweise ist das Gestell mit einer Bremsvorrichtung versehen, um ein Wegrollen der Reinigungsvorrichtung auf unebenen Oberflächen zu vermeiden. Es kann beispielsweise eine automatisch blockierende Feststellbremse verwendet werden, die durch Drücken gelöst werden kann.

Wie aus den Fig. 1 und 2 ersichtlich, sind an dem Gestell 1 Befestigungsmittel 7 für Reinigungsgeräte vorgesehen, die hier als Haken an einer der Seiten der Reinigungsvorrichtung ausgebildet sind. An der gegenüberliegenden Seite ist ein Griff 8 vorgesehen, der als Handgriff zum Schieben bzw. Ziehen der Reinigungsvorrichtung verwendet werden kann oder an dem beispielsweise Lappen befestigt werden können.

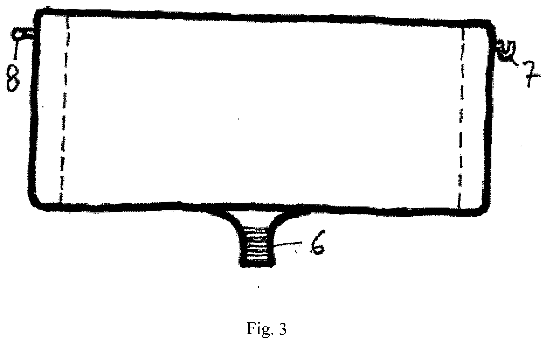

Vorzugsweise schließt sich an den aus Fig. 3 ersichtlichen Auslaßstutzen 6 ein Auslaßschlauch an, um ein Verspritzen des Putzwassers beim Ablassen möglichst zu vermeiden.

## Patentansprüche

1. Mobile Reinigungsvorrichtung, **dadurch gekennzeichnet, daß** ein fahrbares Gestell (1) mit mindestens drei Beinen (2) vorgesehen ist, welche an ihrem unteren Ende mit Rollen (3) versehen sind, wobei das Gestell (1) eine Aufnahme (4) für ein Reinigungsgefäß (5) aufweist, wobei das Reinigungsgefäß (5) in seinem Boden einen Auslaßstutzen (6) aufweist und das fahrbare Gestell (1) so ausgebildet ist, daß zum Entleeren des Reinigungsgefäßes (5) eine Toilettenschüssel überfahrbar ist.

2. Mobile Reinigungsvorrichtung gemäß Anspruch 1, **dadurch gekennzeichnet, daß** Mittel zum lösbaren Verschließen des Auslaßstutzens (6) vorgesehen sind.

3. Mobile Reinigungsvorrichtung gemäß Anspruch 1 oder Anspruch 2, **dadurch gekennzeichnet, daß** eine Hebelmechanik zum Verschließen des Auslaßstutzens (6) vorgesehen ist.

4. Mobile Reinigungsvorrichtung gemäß einem der Ansprüche 1 bis 3, **dadurch gekennzeichnet, daß** sich an den Auslaßstutzen (6) ein Auslaßschlauch anschließt.

5. Mobile Reinigungsvorrichtung gemäß einem der Ansprüche 1 bis 4, **dadurch gekennzeichnet, daß** das fahrbare Gestell (1) eine lösbare Bremsvorrichtung aufweist.

6. Mobile Reinigungsvorrichtung gemäß einem der Ansprüche 1 bis 5, **dadurch gekennzeichnet, daß** das Gestell (1) vier Beine (2) aufweist.

7. Mobile Reinigungsvorrichtung gemäß einem der Ansprüche 1 bis 6, **dadurch gekennzeichnet, daß** die Beine (2) des Gestells (1) längenveränderbar sind.

8. Mobile Reinigungsvorrichtung gemäß einem der Ansprüche 1 bis 7, **dadurch gekennzeichnet, daß** an dem Gestell (1) Befestigungsmittel für Gegenstände, insbesondere für Reinigungsgeräte, vorgesehen sind.

9. Mobile Reinigungsvorrichtung gemäß einem der Ansprüche 1 bis 8, **dadurch gekennzeichnet, daß** an dem Gestell mindestens ein Griff (8) zum Schieben bzw. Ziehen des mobilen Reinigungsgerätes vorgesehen sind.

10. Mobile Reinigungsvorrichtung gemäß einem der Ansprüche 1 bis 9, **dadurch gekennzeichnet, daß** das Reinigungsgefäß innen und/oder außen magnetisiert ist.
